# EUROPÄISCHE PATENTSCHRIFT

(11) **EP 4 574 458 B1**
(45) Veröffentlichungstag und Bekanntmachung des Hinweises auf die Patenterteilung: **17.06.2026**
(21) Anmeldenummer: 24213946.7
(22) Anmeldetag: 19.11.2024
(51) Int. Cl.: B60C 9/20, B60C 11/03, B60C 9/22

(54) **LANDWIRTSCHAFTSREIFEN**
LANDWIRTSCHAFTSREIFEN
LANDWIRTSCHAFTSREIFEN

(30) Priorität: 20.12.2023 DE 102023213127
(43) Veröffentlichungstag der Anmeldung: 25.06.2025
(73) Patentinhaber: Continental Reifen Deutschland GmbH, 30175 Hannover (DE)
(72) Erfinder: Mikula, Martin, 020 01 Púchov (SK); Krecmer, Norbert, 020 01 Púchov (SK)
(74) Vertreter: Continental Corporation

(56) Entgegenhaltungen:
- JP-A- 2000 233 608
- JP-A- 2009 286 177
- JP-A- 2011 001 022
- US-A1- 2006 278 321
- US-A1- 2009 139 631
- US-A1- 2013 098 518

## Beschreibung

Die Erfindung betrifft einen Landwirtschaftsreifen mit zwei Seitenwänden, einem Gürtelverband mit zumindest zwei Gürtellagen und einem Laufstreifen.

Landwirtschaftsreifen mit derartigen Stollenprofilen sind schon seit langem bekannt und üblich und werden insbesondere auf Ackerschleppern und sonstigen landwirtschaftlichen Maschinen als Traktionsreifen eingesetzt.

Ein Landwirtschaftsreifen der eingangs genannten Art ist beispielsweise aus der EP 0 795 427 A1 bekannt. Dieser Landwirtschaftsreifen weist einen Laufstreifen mit zwei Stollenreihen bildenden, in Draufsicht V-förmig über die Laufstreifenbreite verlaufenden Stollen mit jeweils einem laufstreifeaußenseitigen Stollenabschnitt, welcher zur Umfangsrichtung unter einem Winkel von größer 60° und kleiner 90° verläuft, und einem laufstreifeninnenseitigen Stollenabschnitt, welcher zur Umfangsrichtung unter einem Winkel von kleiner 40° verläuft, auf. Solche Stollen sollen für die Handlingperformance günstig sein.

Ein weiterer Landwirtschaftsreifen der eingangs genannten Art ist aus der US 2009/0139631 A1 bekannt. Dieser Landwirtschaftsreifen weist zwei Seitenwände, einen Gürtelverband mit zwei Gürtellagen, einem Laufstreifen und eine Karkasseinlage auf. In jedem Schulterbereich ist in der Nähe der Karkasseinlage zumindest ein Schulterverstärkungsstreifen verbaut, welcher zu den Gürtellagen in axialer Richtung beabstandet ist. Der Schulterverstärkungsstreifen besteht bevorzugt aus einem Gewebe aus synthetischen Fasern, Naturfasern oder einer Kombination aus synthetischen Fasern und Naturfasern und soll eine Rissfortpflanzung verhindern.

Die US 2006/0278321 A1 offenbart einen Fahrzeugreifen, welcher beispielsweise ein OTR-Reifen (Erdbewegungsreifen) ist und welcher Schulterverstärkungsstreifen aus einem dreilagigen Gewebe aufweist.

Aus der JP 2011 001 022 A ist ein Landwirtschaftsreifen mit einer mehrlagigen Karkasseinlage bekannt. Zwischen den Lagen der Karkasseinlage sind Schulterverstärkungsstreifen aus Gummimaterial mit einer Dicke von 0,5 mm bis 2,5 mm und einem spezifischen Spannungsmodul verbaut, wodurch die Gefahr der Rissbildung in der Innenschicht reduziert sein soll.

Die JP 2000 233 608 A offenbart einen Landwirtschaftsreifen mit einer Karkasseinlage mit vier Karkasslagen, welche jeweils in eine Gummierung eingebettete Korde enthalten. Die in benachbarten Karkasslagen befindlichen Korde weisen voneinander gegenseitige Abstände auf, wobei die Gummierung der Karkasslagen derart ausgeführt ist, dass der gegenseitige Abstand, welchen die Korde der radial äußersten Karkasslage zu den Korden der angrenzenden Karkasslage aufweisen, am größten ist. Eine solche Karkasseinlage soll eine gute Haltbarkeit aufweisen.

Die JP 2009 286 177 A offenbart einen Reifen mit einem Laufstreifen mit zwei Stollenreihen mit V-förmig über die Laufstreifenbreite verlaufenden Stollen und einem mehrlagigen Gürtelverband. Der Gürtelverband umfasst mehrere Gürtellagen mit Korden, welche eine spezifische relative Orientierung zu den Stollen aufweisen. Durch diese Maßnahme soll ein Ablösen der Gürtellagenendabschnitte vermieden werden.

Aus der US 2013/0098518 A1 ist ein Landwirtschaftsreifen mit einem Laufstreifen mit einem Stollenprofil und einem Gürtelverband mit zwei Stahlkorde enthaltenden Gürtellagen bekannt. Die Endabschnitte der Gürtellagen sind durch relative dicke Gürtelkantenpolster voneinander separiert. Dies soll unter Aufrechterhaltung einer guten Reifenhaltbarkeit einen ansonsten vereinfachten Reifenaufbau gestatten. Bei Landwirtschaftsreifen weisen die Stollen der Stollenreihen des Laufsteifens eine hohe Steifigkeit auf, wodurch beim Abrollen des Reifens über die sich deformierenden Stollen signifikante Kräfte in Richtung Reifeninnenraum übertragen werden. Dadurch besteht die Gefahr, dass an der Innenschicht des Landwirtschaftsreifens Risse auftreten, sodass dieser undicht wird und der Landwirtschafstreifen in der Folge Luft verliert (Druckverlust).

Der Erfindung liegt daher die Aufgabe zugrunde, bei einem Landwirtschaftsreifen der eingangs genannten Art, die Gefahr des Auftretens von Rissen an der Innenschicht merklich zu reduzieren.

Gelöst wird die gestellte Aufgabe erfindungsgemäß dadurch, dass in jedem Schulterbereich zwischen der Seitenwand und dem Laufstreifen jeweils zumindest ein zu den Gürtellagen in axialer Richtung beabstandeter Schulterverstärkungsstreifen mit in eine Streifengummierung eingebetteten, zur Umfangsrichtung unter einem Winkel von 0° bis 15° verlaufenden Textilkorden verbaut ist.

Die Schulterverstärkungstreifen "fangen" bedingt durch ihre in Umfangsrichtung bzw. im Wesentlichen in Umfangsrichtung orientierten Textilkorde die über die Stollen in Richtung Reifeninnenraum wirkenden Kräfte ab und verstärken somit die Schulterbereiche derart, dass die Innenschicht deutlich besser als bisher vor dem Auftreten von Rissen geschützt ist.

Gemäß einer bevorzugten Ausführung sind die Textilkorde im Schulterverstärkungsstreifen mit einer Korddichte von 75 epdm bis 115 epdm, insbesondere von 80 epdm bis 110 epdm, bevorzugt von 85 epdm bis 105 epdm, besonders bevorzugt von 90 epdem bis 100 epdm, angeordnet. Derart ausgeführte Schulterverstärkungsstreifen fangen die erwähnten Kräfte besonders wirksam ab.

Eine weitere bevorzugte Ausführung sieht vor, dass die Textilkorde des Schulterverstärkungsstreifens in Umfangsrichtung verlaufen. Auch diese Maßnahme trägt zu einer weiteren Verbesserung des Schutzes der Innenschicht vor Rissen bei.

Gemäß einer vorteilhaften Variante enthält der Schulterverstärkungsstreifen ausschließlich die zur Umfangsrichtung unter einem Winkel von 0° bis 15° verlaufenden Textilkorde.

Gemäß einer alternativen, vorteilhaften Variante enthält der Schulterverstärkungsstreifen ein Gewebe, welches die zur Umfangsrichtung unter einem Winkel von 0° bis 15° verlaufenden Textilkorde und weitere Textilkorde enthält.

Bevorzugt weist der Schulterverstärkungsstreifen eine zwischen der an der jeweiligen Seitenwand liegenden Streifeninnenseite und der am Laufstreifen liegenden Streifenaußenseite ermittelte Stärke von 1,00 mm bis 3,00 mm, insbesondere von 1,50 mm bis 2,50 mm, auf.

Eine weitere bevorzugte Ausführung sieht vor, dass der Schulterverstärkungsstreifen, im Reifenquerschnitt betrachtet, eine Erstreckungslänge von 30,0 mm bis 200,0 mm, insbesondere von bis zu 150,0 mm, vorzugsweise von bis zu 100,0 mm, bevorzugt von bis zu 70,0 mm, besonderes bevorzugt von 35,0 mm bis 55,0 mm, am meisten bevorzugt von 40,0 mm bis 50,0 mm, aufweist.

Die Lage des Schulterverstärkungsstreifens ist bevorzugt derart, dass der Schulterverstärkungsstreifen, im Reifenquerschnitt betrachtet, durch eine in axialer Richtung durch die Randkante des Laufstreifenbodens verlaufende Hilfslinie in zwei Streifenteile gegliedert ist, welche jeweils eine Erstreckungslänge von 45% bis 55%, insbesondere von 47% bis 53%, einer bzw. der im Reifenquerschnitt ermittelten Erstreckungslänge des Schulterverstärkungsstreifens aufweisen. Der Schulterverstärkungsstreifen weist daher eine im Hinblick auf das seitliche Laufstreifenende gewissermaßen zentrierte Position auf, wodurch die besonders stark beanspruchten Bereiche sehr wirkungsvoll verstärkt und derart die Innenschicht auch besonders wirkungsvoll vor Rissen geschützt ist.

Gemäß einer weiteren bevorzugten Ausführung weist der Schulterverstärkungsstreifen ein von der Reifenäquatorialebene am weitesten beabstandetes, außenseitiges Streifenende auf, welches, im Reifenquerschnitt betrachtet, zum nächstliegenden, reifenaußenseitigen Laufstreifenende in radialer Richtung einen Abstand von 10,0 mm bis 30,0 mm, insbesondere von 15,0 mm bis 25,0 mm, aufweist.

Bei der letztgenannten Ausführung besteht eine vorteilhafte Weiterentwicklung darin, dass sich die reifenaußenseitigen Laufstreifenenden, im Reifenquerschnitt betrachtet, radial außerhalb der Stelle mit der Querschnittsbreite des Landwirtschaftsreifens befinden und zu dieser einen in radialer Richtung ermittelten Abstand von insbesondere 5,0 mm bis 25,0 mm aufweisen.

Bevorzugt ist ferner, wenn der Schulterverstärkungsstreifen in Umfangsrichtung umläuft. Dadurch ist die Lastverteilung über den Reifenumfang optimiert, wodurch der Schutz der Innenschicht weiter verbessert ist.

Außerdem ist es bevorzugt, wenn gemäß einer weiteren Ausführung in zumindest einer Reifenschulter, bevorzugt in jeder Reifenschulter, jeweils mehrere Schulterverstärkungsstreifen verbaut sind, welche vorzugsweise jeweils über zumindest 10% des Reifenumfangs verlaufen. Auch mit dieser Maßnahme ist die Lastverteilung über den Reifenumfang optimiert, wodurch der Schutz der Innenschicht weiter verbessert ist.

Bei der letztgenannten Ausführung ist es günstig, wenn in jeder Laufstreifenhälfte radial innerhalb jedes Stollens jeweils ein Schulterverstärkungsstreifen verbaut ist. Somit ist den besonders beanspruchten Stellen je ein Schulterverstärkungsstreifen vorgesehen.

Gemäß einer weiteren bevorzugten Ausführung weisen die Textilkorde des Schulterverstärkungsstreifens einen Durchmesser von 0,40 mm bis 0,60 mm, bevorzugt von 0,45 mm bis 0,55 mm, auf. Solche Korde sind zum Abfangen der über die Stollen in Richtung Reifeninnenraum wirkenden Kräfte besonders gut geeignet.

Der Textilkord des Schulterverstärkungsstreifens ist bevorzugt ein 1440 dtex x 2 Polyester-Kord.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen schematischen Querschnitt durch einen Landwirtschaftsreifen mit einer Ausführungsvariante der Erfindung und
Fig. 2 eine Draufsicht auf einen Umfangsabschnitt des Laufstreifens des Landwirtschaftsreifens aus Fig. 1.

Gemäß der Erfindung ausgeführte Landwirtschaftsreifen sind insbesondere Fahrzeugreifen für Ackerschlepper, beispielsweise für Erntemaschinen, etwa Kartoffelroder oder Mähdrescher, sowie vorzugsweise Fahrzeugluftreifen in Radialbauart für Felgen mit einem Felgendurchmesser von 20 Zoll bis 42 Zoll.

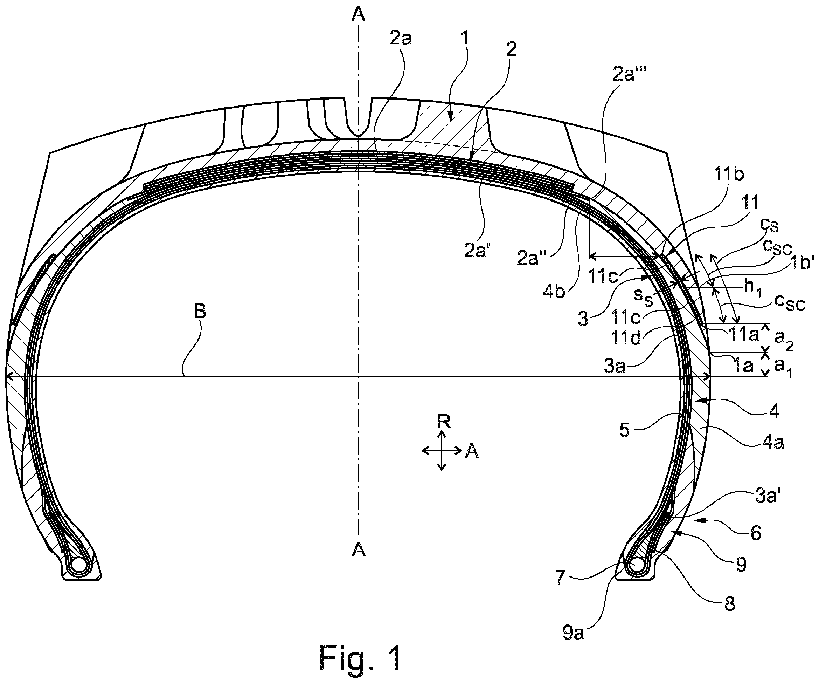

Fig. 1 zeigt einen Querschnitt durch einen Landwirtschaftsreifen mit einem Laufstreifen 1, einem Gürtelverband 2, einer mehrlagigen Karkasseinlage 3, Seitenwänden 4, einer Innenschicht 5 und Wulstbereichen 6, welche je einen Wulstkern 7, einen Kernreiter 8 und ein Hornprofil 9 mit einer Wulstzehe 9a umfassen.

Die Reifenäquatorialebene ist durch eine Linie A-A, die radiale Richtung ist durch einen Doppelpfeil R und die axiale Richtung ist durch einen Doppelpfeil A angedeutet. Im Rahmen der gegenständlichen Erfindung wird unter der "radialen Richtung" die im Reifenquerschnitt in und parallel zur Reifenäquatorialebene verlaufende Richtung verstanden. Ferner wird unter der "axialen Richtung" die Richtung parallel zur Reifenachse, also die im Reifenquerschnitt senkrecht zur Reifenäquatorialebene verlaufende Richtung verstanden.

In Fig. 1 ist die in axialer Richtung ermittelte Querschnittsbreite B des Landwirtschaftsreifens eingezeichnet. Die Querschnittsbreite B ist gemäß E.T.R.T.O.-Standards bekannter Weise "der Abstand zwischen den Außenseiten der Seitenwände des aufgepumpten Reifens, ausschließlich der Erhöhungen durch Beschriftung, Zierrippen und Scheuerleisten". Die Reifenmessung erfolgt am unbelasteten, auf seiner Messfelge montierten und auf den empfohlenen Reifenluftdruck aufgepumpten Reifen.

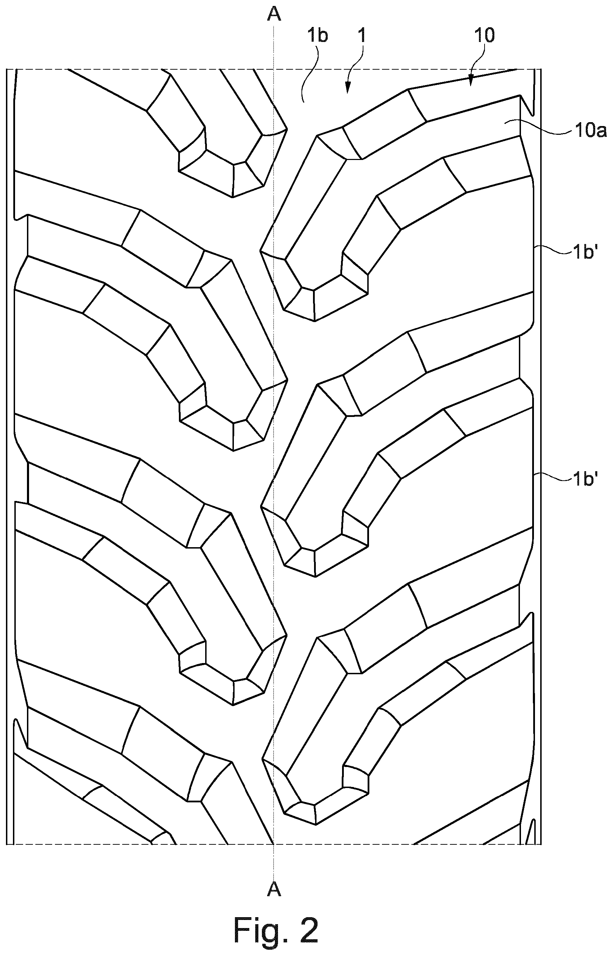

Fig. 2 zeigt eine Draufsicht auf den Laufstreifen 1. Der Laufstreifen 1 weist ein Stollenprofil mit zwei Stollenreihen 10 aus jeweils in Umfangsrichtung aufeinanderfolgenden, voneinander beabstandeten, parallel zueinander ausgerichteten Stollen 10a auf, wobei die Stollen 10a insgesamt V-förmig über die Laufstreifenbreite sowie vom jeweiligen Laufstreifenrand zur Laufstreifenmitte verlaufen und wobei die Stollen 10a aus der einen Stollenreihe 10 zu den Stollen 10a aus der anderen Stollenreihe 10 in Umfangsrichtung gegeneinander versetzt sind. Der Laufstreifen 1 weist ferner einen ihn radial nach innen begrenzenden Laufstreifenboden 1b auf, welcher sich zwischen den Stollen 10a erstreckt und an den Rändern des Laufstreifens 1 durch jeweils zwischen zwei aufeinanderfolgenden Stollen 10a sowie in Umfangsrichtung verlaufenden Randkanten 1b' begrenzt ist. Wie Fig. 1 ferner zeigt, weist der Laufstreifen 1, im Reifenquerschnitt betrachtet, zwei an den Seitenwänden 4 liegende, reifenaußenseitige Laufstreifenenden 1a auf, welche sich radial außerhalb der Stelle mit der Querschnittsbreite B befinden und zu dieser einen in radialer Richtung ermittelten Abstand a₁ von 5,0 mm bis 25,0 mm aufweisen.

Gemäß Fig. 1 weist die Karkasseinlage 3 drei aufeinander liegende Karkasslagen 3a auf, welche jeweils aus in einer Karkassgummierung eingebetteten, innerhalb der Karkasslagen 3a jeweils parallel zueinander verlaufenden Karkasskorden bestehen. Die Karkasskorde sind zur Umfangsrichtung unter einem Winkel von 85° bis 90° orientiert, wobei die Karkasskorde, welche in einander unmittelbar benachbarten Karkasslagen 3a verlaufen. zueinander kreuzend angeordnet sind. Die Karkasslagen 3a verlaufen zwischen dem Gürtelverband 2 und der Innenschicht 5, zwischen den Seitenwänden 4 und der Innenschicht 5 und zwischen den Hornprofilen 9 und der Innenschicht 5. Die beiden zur Innenschicht 5 nächstliegenden Karkasslagen 3a sind in den Wulstbereichen 6 um die Wulstkerne 7 von der Reifeninnenseite zur Reifenaußenseite umgeschlagen und enden reifenaußenseitig jeweils mit einem im Bereich des jeweiligen Hornprofils 9 liegenden Karkasshochschlag 3a'. Die zur Innenschicht 5 am weitesten beabstandete, radial äußerste Karkasslage 3a ist nicht um die Wulstkerne 7 umgeschlagen, sondern verläuft in den Wulstbereichen 6 reifenaußenseitig über die Karkasshochschläge 3a' der beiden anderen Karkasslagen 3a und endet im Bereich neben dem jeweiligen Kernreiter 8 bzw. im Bereich neben dem jeweiligen Wulstkern 7. Die Karkasskorde sind insbesondere Textilkorde, beispielsweise Aramidkorde.

Der Gürtelverband 2 weist vier Gürtellagen 2a mit je zwei Gürtelkanten 2a‴ auf, wobei die Gürtellagen 2a jeweils aus in einer Gürtelgummierung eingebetteten, insbesondere in bekannter Weise ausgeführten und orientierten Gürtelkorden, vorzugsweise Textilkorden, bestehen, wobei die Gürtelkorde in benachbarten Gürtellagen 2a einander bevorzugt kreuzen. Die radial innerste Gürtellage 2a verläuft mit einem zentralen Gürtellagenabschnitt 2a' in Kontakt mit der radial äußersten Karkasslage 3a und weist, im Reifenquerschnitt betrachtet, zwei die Gürtelkanten 2a‴ umfassende, randseitige Gürtellagenabschnitte 2a" auf, welche die entsprechende Karkasslage 3a nicht kontaktieren, sondern von dieser abragen.

Die Seitenwände 4 passieren die Stelle der Querschnittsbreite B, überlappen jeweils mit einem auslaufenden, radial inneren Wandabschnitt 4a außenseitig das entsprechende Hornprofil 9 und weisen jeweils einen zwischen den entsprechenden randseitigen Gürtellagenabschnitt 2a" und der radial äußersten Karkasslage 3a hineinverlaufenden, radial äußeren Wandabschnitt 4b auf. Der Landwirtschaftsreifen weist daher eine sogenannten "Sidewall under Belt"-Konstruktion (SUB-Konstruktion) auf.

Die Innenschicht 5 bedeckt die Innenseite des Landwirtschaftsreifens, besteht aus einem luftdichten Gummimaterial und erstreckt sich bis in den Bereich der Wulstzehen 9a der Hornprofile 9.

Im Bereich radial innerhalb jeder Stollenreihe 10 (Fig. 1) ist zwischen der jeweiligen Seitenwand 4 und dem Laufstreifen 1 jeweils zumindest ein von den Gürtellagen 2a und vom jeweiligen reifenaußenseitigen Laufstreifenende 1a beabstandeter Schulterverstärkungsstreifen 11 verbaut. Bevorzugter ist jeweils ein über den Reifenumfang umlaufender Schulterverstärkungsstreifen 11 vorgesehen. Alternativ können jeweils mehrere vorzugsweise je über zumindest 10% des Reifenumfangs verlaufende Schulterverstärkungsstreifen 11 vorgesehen sein, wobei besonders bevorzugt radial innerhalb jedes Stollens 10a jeweils ein Schulterverstärkungsstreifen 11 verbaut ist.

Jeder Schulterverstärkungsstreifen 11 weist, im Reifenquerschnitt betrachtet, eine entlang des Schulterverstärkungsstreifens 11 gemessene Erstreckungslänge cs von 30,0 mm bis 200,0 mm, insbesondere von bis zu 150,0 mm, vorzugsweise von bis zu 100,0 mm, bevorzugt von bis zu 70,0 mm, besonderes bevorzugt von 35,0 mm bis 55,0 mm, am meisten bevorzugt von 40,0 mm bis 50,0 mm, sowie eine Stärke ss von 1,00 mm bis 3,00 mm, insbesondere von 1,50 mm bis 2,50 mm, auf, wobei die Stärke ss als kleinstmöglicher Abstand zwischen der an der jeweiligen Seitenwand 4 liegenden Streifeninnenseite und der am Laufstreifen 1 liegenden Streifenaußenseite ermittelt ist.

Jeder Schulterverstärkungsstreifen 11 weist ferner ein von der Reifenäquatorialebene (Linie A-A) am weitesten beabstandetes, außenseitiges Streifenende 11a und ein zur Reifenäquatorialebene (Linie A-A) nächstliegendes, zu den Gürtellagen 2a beabstandetes, innenseitiges Streifenende 11b auf. Das außenseitige Streifenende 11a weist, im Reifenquerschnitt betrachtet, zum jeweiligen reifenaußenseitigen Laufstreifenende 1a in radialer Richtung einen Abstand a₂ von 10,0 mm bis 30,0 mm, insbesondere von 15,0 mm bis 25,0 mm, auf. Der Schulterverstärkungsstreifen 11 wird, im Reifenquerschnitt betrachtet, durch eine in axialer Richtung durch die jeweilige Randkante 1b' (vergl. Fig. 2) verlaufende Hilfslinie h₁ in zwei Streifenteile 11c mit je einer Erstreckungslänge csc von 45% bis 55%, insbesondere von 47% bis 53%, der Erstreckungslänge cs gegliedert.

Jeder Schulterverstärkungsstreifen 11 besteht aus in einer Streifengummierung nebeneinander eingebetteten Textilkorden 11d, welche in Umfangsrichtung orientiert sind, also in Umfangsrichtung verlaufen. Die Textilkorde 11d weisen jeweils einen maximalen Durchmesser (Durchmesser an der dicksten Stelle) von 0,40 mm bis 0,60 mm, bevorzugt von 0,45 mm bis 0,55 mm, auf, bestehen beispielsweise aus Polyester und weisen zum Beispiel die Konstruktion 1440 dtex x 2 auf. In jedem Schulterverstärkungsstreifen 11 sind die Textilkorde 11d mit einer Korddichte von 75 epdm ("ends per decimeter") bis 115 epdm, insbesondere von 80 epdm bis 110 epdm, bevorzugt von 85 epdm bis 105 epdm, besonders bevorzugt von 90 epdem bis 100 epdm angeordnet. Die Streifengummierung stimmt vorzugsweise mit der Gürtelgummierung überein.

Die Erfindung ist auf das beschriebene Ausführungsbeispiel nicht beschränkt.

Die Karkasseinlage 3 weist insbesondere bis zu vier Karkasslagen auf. Die Textilkorde 11d in den Schulterverstärkungsstreifen 11 verlaufen innerhalb der Schulterverstärkungsstreifen 11 nebeneinander, also kreuzungsfrei, sowie zur Umfangsrichtung unter einem Winkel von 0° bis 15°. Die Schulterverstärkungsstreifen 11 können jeweils ein Gewebe aus Textilkorden aufweisen, wobei die zur Umfangsrichtung unter einem Winkel von 0° bis 15° verlaufenden Textilkorde Bestandteil des Gewebes sind. Der Landwirtschaftsreifen muss keine SUB-Konstruktion aufweisen.

### Bezugszeichenliste

- 1: Laufstreifen
- 1a: reifenaußenseitiges Laufstreifenende
- 1b: Laufstreifenboden
- 1b': Randkante
- 2: Gürtelverband
- 2a: Gürtellage
- 2a": zentraler Gürtellagenabschnitt
- 2a": randseitiger Gürtellagenabschnitt
- 2a‴: Gürtelkante
- 3: Karkasseinlage
- 3a: Karkasslage
- 3a': Karkasshochschlag
- 4: Seitenwand
- 4a: radial innerer Wandabschnitt
- 4b: radial äußerer Wandabschnitt
- 5: Innenschicht
- 6: Wulstbereich
- 7: Wulstkern
- 8: Kernreiter
- 9: Hornprofil
- 9a: Wulstzehe
- 10: Stollenreihe
- 10a: Stollen
- 11: Schulterverstärkungsstreifen
- 11a: außenseitiges Streifenende
- 11b: innenseitiges Streifenende
- 11c: Streifenteil
- 11d: Textilkord
- A: Doppelpfeil (axiale Richtung)
- A-A: Linie (Reifenäquatorialebene)
- B: Querschnittsbreite
- a₁, a₂: Abstand
- c_{S}, c_{SC}: Erstreckungslänge
- h₁: Hilfslinie
- R: Doppelpfeil (radiale Richtung)
- s_{S}: Stärke

## Patentansprüche

1. Landwirtschaftsreifen mit zwei Seitenwänden (4), einem Gürtelverband (2) mit zumindest zwei Gürtellagen (2a) und einem Laufstreifen (1) mit zwei Stollenreihen (10) bildenden, in Draufsicht V-förmig über die Laufstreifenbreite verlaufenden Stollen (10a),
wobei in jedem Schulterbereich zwischen der Seitenwand (4) und dem Laufstreifen (1) jeweils zumindest ein zu den Gürtellagen (2a) in axialer Richtung beabstandeter Schulterverstärkungsstreifen (11) mit in einer Streifengummierung eingebetteten, zur Umfangsrichtung unter einem Winkel von 0° bis 15° verlaufenden Textilkorden (11d) verbaut ist.

2. Landwirtschaftsreifen nach Anspruch 1, **dadurch gekennzeichnet, dass** die Textilkorde (11d) im Schulterverstärkungsstreifen (11) mit einer Korddichte von 75 epdm bis 115 epdm, insbesondere von 80 epdm bis 110 epdm, bevorzugt von 85 epdm bis 105 epdm, besonders bevorzugt von 90 epdem bis 100 epdm, angeordnet sind.

3. Landwirtschaftsreifen nach Anspruch 1 oder 2, **dadurch gekennzeichnet, dass** die Textilkorde (11d) des Schulterverstärkungsstreifens (11) in Umfangsrichtung verlaufen.

4. Landwirtschaftsreifen nach einem der Ansprüche 1 bis 3, **dadurch gekennzeichnet, dass** der Schulterverstärkungsstreifen (11) ausschließlich die zur Umfangsrichtung unter einem Winkel von 0° bis 15° verlaufenden Textilkorde (11d) enthält.

5. Landwirtschaftsreifen nach einem der Ansprüche 1 bis 3, **dadurch gekennzeichnet, dass** der Schulterverstärkungsstreifen (11) ein Gewebe enthält, welches die zur Umfangsrichtung unter einem Winkel von 0° bis 15° verlaufenden Textilkorde (11d) und weitere Textilkorde enthält.

6. Landwirtschaftsreifen nach einem der Ansprüche 1 bis 5, **dadurch gekennzeichnet, dass** der Schulterverstärkungsstreifen (11) eine zwischen der an der jeweiligen Seitenwand (4) liegenden Streifeninnenseite und der am Laufstreifen (1) liegenden Streifenaußenseite ermittelte Stärke (ss) von 1,00 mm bis 3,00 mm, insbesondere von 1,50 mm bis 2,50 mm, aufweist.

7. Landwirtschaftsreifen nach einem der Ansprüche 1 bis 6, **dadurch gekennzeichnet, dass** der Schulterverstärkungsstreifen (11), im Reifenquerschnitt betrachtet, eine Erstreckungslänge (cs) von 30,0 mm bis 200,0 mm, insbesondere von bis zu 150,0 mm, vorzugsweise von bis zu 100,0 mm, bevorzugt von bis zu 70,0 mm, besonderes bevorzugt von 35,0 mm bis 55,0 mm, am meisten bevorzugt von 40,0 mm bis 50,0 mm, aufweist.

8. Landwirtschaftsreifen nach einem der Ansprüche 1 bis 7, **dadurch gekennzeichnet, dass** der Schulterverstärkungsstreifen (11), im Reifenquerschnitt betrachtet, durch eine in axialer Richtung durch die Randkante (1b') des Laufstreifenbodens (1b) verlaufende Hilfslinie (h₁) in zwei Streifenteile (11c) gegliedert ist, welche jeweils eine Erstreckungslänge (csc) von 45% bis 55%, insbesondere von 47% bis 53%, einer bzw. der im Reifenquerschnitt ermittelten Erstreckungslänge (cs) des Schulterverstärkungsstreifens (11) aufweisen.

9. Landwirtschaftsreifen nach einem der Ansprüche 1 bis 8, **dadurch gekennzeichnet, dass** der Schulterverstärkungsstreifen (11) ein von der Reifenäquatorialebene (Linie A-A) am weitesten beabstandetes, außenseitiges Streifenende (11a) aufweist, welches, im Reifenquerschnitt betrachtet, zum nächstliegenden, reifenaußenseitigen Laufstreifenende (1a) in radialer Richtung einen Abstand (a₂) von 10,0 mm bis 30,0 mm, insbesondere von 15,0 mm bis 25,0 mm, aufweist.

10. Landwirtschaftsreifen nach Anspruch 9, **dadurch gekennzeichnet, dass** sich die reifenaußenseitigen Laufstreifenenden (1a), im Reifenquerschnitt betrachtet, radial außerhalb der Stelle mit der Querschnittsbreite (B) des Landwirtschaftsreifens befinden und zu dieser einen in radialer Richtung ermittelten Abstand (a₁) von insbesondere 5,0 mm bis 25,0 mm aufweisen.

11. Landwirtschaftsreifen nach einem der Ansprüche 1 bis 10, **dadurch gekennzeichnet, dass** der Schulterverstärkungsstreifen (11) in Umfangsrichtung umläuft.

12. Landwirtschaftsreifen nach einem der Ansprüche 1 bis 10, **dadurch gekennzeichnet, dass** in zumindest einem Schulterbereich, bevorzugt in jedem Schulterbereich, jeweils mehrere Schulterverstärkungsstreifen (11) verbaut sind, welche vorzugsweise jeweils über zumindest 10% des Reifenumfangs verlaufen.

13. Landwirtschaftsreifen nach Anspruch 12, **dadurch gekennzeichnet, dass** in jedem Schulterbereich radial innerhalb jedes Stollens (10a)jeweils ein Schulterverstärkungsstreifen (11) verbaut ist.

14. Fahrzeugluftreifen nach einem der Ansprüche 1 bis 13, **dadurch gekennzeichnet, dass** die Textilkorde (11d) des Schulterverstärkungsstreifens (11) einen Durchmesser von 0,40 mm bis 0,60 mm, bevorzugt von 0,45 mm bis 0,55 mm, aufweisen.

15. Landwirtschaftsreifen nach einem der Ansprüche 1 bis 14, **dadurch gekennzeichnet** die Textilkorde (11d) des Schulterverstärkungsstreifens (11) 1440 dtex x 2 Polyester-Korde sind.

## Claims

1. Agricultural tyre with two sidewalls (4), a breaker belt assembly (2) with at least two breaker plies (2a) and a tread (1) with bars (10a), forming two rows of bars (10) and running in plan view in a V-shaped manner over the width of the tread,
wherein incorporated between the sidewall (4) and the tread (1) in each shoulder region there is in each case at least one shoulder reinforcing strip (11), which is kept at a distance from the breaker plies (2a) in the axial direction and has textile cords (11d) embedded in a strip rubber coating and running at an angle of 0° to 15° in relation to the circumferential direction.

2. Agricultural tyre according to Claim 1, **characterized in that** the textile cords (11d) in the shoulder reinforcing strip (11) are arranged with a core density of 75 epdm to 115 epdm, in particular of 80 epdm to 110 epdm, with preference of 85 epdm to 105 epdm, with particular preference of 90 epdm to 100 epdm.

3. Agricultural tyre according to Claim 1 or 2, **characterized in that** the textile cords (11d) of the shoulder reinforcing strip (11) run in the circumferential direction.

4. Agricultural tyre according to one of Claims 1 to 3, **characterized in that** the shoulder reinforcing strip (11) only contains textile cords (11d) running at an angle of 0° to 15° in relation to the circumferential direction.

5. Agricultural tyre according to one of Claims 1 to 3, **characterized in that** the shoulder reinforcing strip (11) contains a woven fabric which contains the textile cords (11d) running at an angle of 0° to 15° in relation to the circumferential direction and further textile cords.

6. Agricultural tyre according to one of Claims 1 to 5, **characterized in that** the shoulder reinforcing strip (11) has a thickness (s_{S}), between the strip inner side lying against the respective sidewall (4) and the strip outer side lying against the tread (1), of 1.00 mm to 3.00 mm, in particular of 1.50 mm to 2.50 mm.

7. Agricultural tyre according to one of Claims 1 to 6, **characterized in that**, when seen in the cross section of the tyre, the shoulder reinforcing strip (11) has a length of extent (cs) of 30.0 mm to 200.0 mm, in particular of up to 150.0 mm, preferably of up to 100.0 mm, with preference of up to 70.0 mm, with particular preference of 35.0 mm to 55.0 mm, with most preference of 40.0 mm to 50.0 mm.

8. Agricultural tyre according to one of Claims 1 to 7, **characterized in that**, when seen in the cross section of the tyre, the shoulder reinforcing strip (11) is divided by a projection line (h₁) running in the axial direction through the peripheral edge (1b') of the tread base (1b) into two strip parts (11c), which have in each case a length of extent (csc) of 45% to 55%, in particular of 47% to 53%, of a or the length of extent (cs), determined in the cross section of the tyre, of the shoulder reinforcing strip (11).

9. Agricultural tyre according to one of Claims 1 to 8, **characterized in that** the shoulder reinforcing strip (11) has an external strip end (11a), kept at the greatest distance from the tyre equatorial plane (line A-A), which, when seen in the cross section of the tyre, is at a distance (a₂) in the radial direction from the nearest tread end (1a) on the outside of the tyre of 10.0 mm to 30.0 mm, in particular of 15.0 mm to 25.0 mm.

10. Agricultural tyre according to Claim 9, **characterized in that**, when seen in the cross section of the tyre, the tread ends (1a) on the outside of the tyre are located radially outside the point with the cross-sectional width (B) of the agricultural tyre and are at a distance (a₁), determined in the radial direction, of in particular 5.0 mm to 25.0 mm.

11. Agricultural tyre according to one of Claims 1 to 10, **characterized in that** the shoulder reinforcing strip (11) runs around in the circumferential direction.

12. Agricultural tyre according to one of Claims 1 to 10, **characterized in that** incorporated in at least one shoulder region, with preference in each shoulder region, there are in each case a number of shoulder reinforcing strips (11), which preferably run in each case over at least 10% of the circumference of the tyre.

13. Agricultural tyre according to Claim 12, **characterized in that** incorporated in each shoulder region there is radially inside each bar (10a) in each case a shoulder reinforcing strip (11).

14. Pneumatic vehicle tyre according to one of Claims 1 to 13, **characterized in that** the textile cords (11d) of the shoulder reinforcing strip (11) have a diameter of 0.40 mm to 0.60 mm, with preference of 0.45 mm to 0.55 mm.

15. Agricultural tyre according to one of Claims 1 to 14, **characterized in that** the textile cords (11d) of the shoulder reinforcing strip (11) are 1440 dtex x 2 polyester cords.

## Revendications

1. Pneu agricole comportant deux parois latérales (4), une ceinture (2) avec au moins deux nappes de ceinture (2a) et une bande de roulement (1) avec des crampons (10a) formant deux rangées de crampons (10), s'étendant, en vue de dessus, en forme de V sur la largeur de la bande de roulement,
dans chaque zone d'épaule, entre la paroi latérale (4) et la bande de roulement (1), étant disposée au moins une bande de renforcement d'épaule (11), espacée des nappes de ceinture (2a) dans la direction axiale, comportant des câbles textiles (11d) intégrés dans une gomme de bande, s'étendant selon un angle de 0° à 15° par rapport à la direction circonférentielle.

2. Pneu agricole selon la revendication 1, **caractérisé en ce que** les câbles textiles (11d) sont disposés dans la bande de renforcement d'épaule (11) avec une densité de câbles de 75 epdm à 115 epdm, en particulier de 80 epdm à 110 epdm, de préférence de 85 epdm à 105 epdm, de manière particulièrement préférée de 90 epdm à 100 epdm.

3. Pneu agricole selon la revendication 1 ou 2, **caractérisé en ce que** les câbles textiles (11d) de la bande de renforcement d'épaule (11) s'étendent dans la direction circonférentielle.

4. Pneu agricole selon l'une quelconque des revendications 1 à 3, **caractérisé en ce que** la bande de renforcement d'épaule (11) contient exclusivement des câbles textiles (11d) s'étendant selon un angle de 0° à 15° par rapport à la direction circonférentielle.

5. Pneu agricole selon l'une quelconque des revendications 1 à 3, **caractérisé en ce que** la bande de renforcement d'épaule (11) contient un tissu comprenant les câbles textiles (11d) s'étendant selon un angle de 0° à 15° par rapport à la direction circonférentielle ainsi que d'autres câbles textiles.

6. Pneu agricole selon l'une quelconque des revendications 1 à 5, **caractérisé en ce que** la bande de renforcement d'épaule (11) présente une épaisseur (s_{S}), déterminée entre le côté intérieur de la bande situé au niveau de la paroi latérale (4) et le côté extérieur de la bande situé au niveau de la bande de roulement (1), de 1,00 mm à 3,00 mm, en particulier de 1,50 mm à 2,50 mm.

7. Pneu agricole selon l'une quelconque des revendications 1 à 6, **caractérisé en ce que** la bande de renforcement d'épaule (11), considérée dans la section du pneu, présente une longueur d'extension (c_{S}) de 30,0 mm à 200,0 mm, en particulier jusqu'à 150,0 mm, avantageusement jusqu'à 100,0 mm, de préférence jusqu'à 70,0 mm, de manière particulièrement préférée de 35,0 mm à 55,0 mm, de manière préférée entre toutes de 40,0 mm à 50,0 mm.

8. Pneu agricole selon l'une quelconque des revendications 1 à 7, **caractérisé en ce que** la bande de renforcement d'épaule (11), considérée dans la section du pneu, est subdivisée, par une ligne auxiliaire (h₁) s'étendant dans la direction axiale à travers le bord marginal (1b') du fond de bande de roulement (1b), en deux parties de bande (11c), lesquelles présentent chacune une longueur d'extension (csc) de 45 % à 55 %, en particulier de 47 % à 53 %, de la longueur d'extension (c_{S}) de la bande de renforcement d'épaule (11) déterminée dans la section du pneu.

9. Pneu agricole selon l'une quelconque des revendications 1 à 8, **caractérisé en ce que** la bande de renforcement d'épaule (11) présente une extrémité de bande extérieure (11a) la plus éloignée du plan équatorial du pneu (ligne A-A), laquelle, considérée dans la section du pneu, présente, par rapport à l'extrémité de bande de roulement (1a) la plus proche située à l'extérieur du pneu, un écart (a₂) en direction radiale de 10,0 mm à 30,0 mm, en particulier de 15,0 mm à 25,0 mm.

10. Pneu agricole selon la revendication 9, **caractérisé en ce que** les extrémités de bande de roulement situées à l'extérieur du pneu (1a), considérées dans la section du pneu, se trouvent radialement à l'extérieur de l'emplacement présentant la largeur de section (B) du pneu agricole et présentent, par rapport à celui-ci, un écart (a₁) déterminé dans la direction radiale, en particulier de 5,0 mm à 25,0 mm.

11. Pneu agricole selon l'une quelconque des revendications 1 à 10, **caractérisé en ce que** la bande de renforcement d'épaule (11) s'étend dans la direction circonférentielle.

12. Pneu agricole selon l'une quelconque des revendications 1 à 10, **caractérisé en ce que**, dans au moins une zone d'épaule, de préférence dans chaque zone d'épaule, plusieurs bandes de renforcement d'épaule (11) sont disposées, lesquelles s'étendent de préférence chacune sur au moins 10 % de la circonférence du pneu.

13. Pneu agricole selon la revendication 12, **caractérisé en ce que**, dans chaque zone d'épaule, radialement à l'intérieur de chaque crampon (10a), une bande de renforcement d'épaule (11) est disposée.

14. Pneu de véhicule selon l'une quelconque des revendications 1 à 13, **caractérisé en ce que** les câbles textiles (11d) de la bande de renforcement d'épaule (11) présentent un diamètre de 0,40 mm à 0,60 mm, de préférence de 0,45 mm à 0,55 mm.

15. Pneu agricole selon l'une quelconque des revendications 1 à 14, **caractérisé en ce que** les câbles textiles (11d) de la bande de renforcement d'épaule (11) sont des câbles en polyester 1440 dtex x 2.
